# EUROPEAN PATENT SPECIFICATION

(11) **EP 2 981 116 B1**
(45) Date of publication and mention of the grant of the patent: **22.04.2020**
(21) Application number: 15178706.6
(22) Date of filing: 28.07.2015
(51) Int. Cl.: H04W 12/08, H04W 84/12, H04W 88/12

(54) **METHOD AND APPARATUS FOR ACCESSING WI-FI NETWORK AND COMPUTER PROGRAM PRODUCT**
VERFAHREN UND VORRICHTUNG FÜR ZUGRIFF AUF WI-FI-NETZWERK UND COMPUTERPROGRAMMPRODUKT
PROCÉDÉ ET APPAREIL POUR ACCÉDER À UN RÉSEAU WI-FI ET PRODUIT DE PROGRAMME INFORMATIQUE

(30) Priority: 28.07.2014 CN 201410364648
(43) Date of publication of application: 03.02.2016
(73) Proprietor: Xiaomi Inc., Beijing 100085 (CN)
(72) Inventor: QIN, Qiuping, 100085 Haidian District (CN); YUAN, Jun, 100085 Haidian District (CN); WANG, Baichao, 100085 Haidian District (CN)
(74) Representative: Robson, Aidan John

(56) References cited:
- US-A1- 2014 137 206
- Wi-Fi Alliance: "Wi-Fi Alliance Wi-Fi CERTIFIED Wi-Fi Protected Setup(TM): Easing the User Experience for Home and Small Office Wi-Fi Networks", , 31 March 2014 (2014-03-31), XP055225297, Retrieved from the Internet: URL:http://www.wi-fi.org/file/wi-fi-certif ied-wi-fi-protected-setup-easing-the-user- experience-for-home-and-small-office-wi [retrieved on 2015-11-03]
- Cisco: "Access Point ACL Filter Configuration Example - Cisco", , 17 June 2006 (2006-06-17), XP055225577, Retrieved from the Internet: URL:http://www.cisco.com/c/en/us/support/d ocs/wireless-mobility/wireless-lan-wlan/68 097-accesspt.html [retrieved on 2015-11-03]
- ECMA INTERNATIONAL: "Near Field Communication Interface and Protocol (NFCIP-1)", INTERNET CITATION, December 2004 (2004-12), XP002451218, Retrieved from the Internet: URL:http://www.ecma-international.org/publ ications/files/ECMA-ST/Ecma-340.pdf [retrieved on 2007-09-17]

## Description

### TECHNICAL FIELD

The present disclosure relates to a field of communication technology, and more particularly to a method and an apparatus of accessing a WI-FI network.

### BACKGROUND

With the development of communication technology, more and more users access a network through a terminal with a wireless access function via a wireless network. A wireless fidelity WI-FI network is the most mainstream wireless network standard at present, before using the WI-FI network to access the network, the terminal needs to access a WI-FI network access device, and accesses the network after the access is successful.

The flow that the terminal accesses the WI-FI network is: firstly, the terminal detects the WI-FI network access device existed in the current environment by a scanning detection request, generates a WI-FI network list after receiving a scanning detection response returned by the WI-FI network access device, a user selects a WI-FI network access device to be accessed in the list and enter a password, at this time, the terminal sends a certification request carrying the password to the WI-FI network access device, the WI-FI network access device records the terminal as a certification device after the password is successfully verified, and returns a certified certification response to the terminal, the terminal sends a request to the WI-FI network access device to establish a connection after receiving the certification response, the WI-FI network access device will enable the terminal to access the WI-FI network based on the request.

At least the following problems are found to exist in the related art:

There are more operations, such as certificating and selecting the access device, and so on required when a user need re manually access the WI-FI network in the above described process. However, for more and more presently popular smart terminals (e.g.: a Internet TV, a smart wearable device, a WI-FI camera) other than a mobile or a tablet, the smart terminals do not have an input device, the operation process of certificating and access device and so on in the process of manually accessing the WI-FI network is too complex and the time consumed is too long, whereby the efficiency with which smart terminals access the WI-FI network is low.

Wi-Fi Alliance Wi-Fi CERTIFIED Wi-Fi Protected Setup™: Easing the User Experience for Home and Small Office Wi-Fi Networks of the Wi-Fi Alliance teaches an automated Wi-Fi setup method. A user activates a Wi-Fi access point and their device, then uses an automated method to initiate secure setup. The automated methods are entering a PIN provided by the access point manufacturer, pushing buttons on both the access point and the user's device, or using NFC by tapping the user's device against the access point.

### SUMMARY

In order to solve the problems in the related art, a method and an apparatus of accessing a WI-FI network are provided by the embodiments of the present disclosure. The technical solutions are as follows:
According to a first aspect of the embodiments of the present disclosure, there is provided a method of accessing a WI-FI network, comprising:
receiving a free-certification access request sent from a first terminal, and determining whether the first terminal meets a free-certification condition according to a terminal identification carried in the free-certification access request;
sending a connection invitation response to the first terminal if the first terminal meets the free-certification condition; and
receiving a connection request sent from the first terminal according to the connection invitation response, and enabling the first terminal to access a wireless fidelity WI-FI network according to the connection request.

According to a second aspect of the embodiments of the present disclosure, there is provided an apparatus of accessing a WI-FI network, comprising:
a first receiving module configured to receive a free-certification access request sent from a first terminal;
a determining module configured to determine whether the first terminal meets a free-certification condition according to a terminal identification carried in the free-certification access request;
a first sending module configured to a connection invitation response to the first terminal when the first terminal meets the free-certification condition;
a second receiving module configured to receive a connection request sent from the first terminal according to the connection invitation response; and
an access module configured to enable the first terminal to access a wireless fidelity WI-FI network according to the connection request.

According to a third aspect of the embodiments of the present disclosure, there is provided an apparatus of accessing a WI-FI network, comprising:
a processor; and
a memory for storing instructions executable by the processor;
wherein the processor is configured to:
receive a free-certification access request sent from a first terminal, and determine whether the first terminal meets a free-certification condition according to a terminal identification carried in the free-certification access request;
send a connection invitation response to the first terminal if the first terminal meets the free-certification condition; and
receive a connection request sent from the first terminal according to the connection invitation response, and enable the first terminal to access a wireless fidelity WI-FI network according to the connection request.

According to a fourth aspect of the embodiments of the present disclosure, there is provided an apparatus of accessing a WI-FI network, comprising:
a processor; and
a memory for storing instructions executable by the processor;
wherein the processor is configured to:
broadcast a free-certification access request to a network access device, the free-certification access request carries its own terminal identification;
receive a connection invitation response sent from the network access device after a free-certification condition is met according to the free-certification access request; and
send a connection request to the network access device according to the connection invitation response, so that a network device enable accessing the WI-FI network.

The technical solutions provided by the embodiments of the present disclosure may include the following advantageous effects:

By receiving a free-certification access request sent from a first terminal need to access a network, and determining whether the first terminal meets a free-certification condition according to the request, sending a connection invitation response to the first terminal if the free-certification condition is met, and enabling the first terminal to access a WI-FI network according to the connection request sent from the first terminal, a terminal which is not convenient for the input operation may access the WI-FI network by way of a free-certification, the access efficiency is improved, and the complexity of the operation is reduced.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method of accessing a WI-FI network according to an exemplary embodiment of the present disclosure.
Fig. 2 is a flow chart showing a method of accessing a WI-FI network according to an exemplary embodiment of the present disclosure.
Fig. 3 is a flow chart showing a method of accessing a WI-FI network according to an exemplary embodiment of the present disclosure.
Fig. 4 is a block diagram showing an apparatus of accessing a WI-FI network according to an exemplary embodiment of the present disclosure.
Fig. 5 is a block diagram showing an apparatus of accessing a WI-FI network according to an exemplary embodiment of the present disclosure.
Fig. 6 is a block diagram showing an apparatus of accessing a WI-FI network according to an exemplary embodiment of the present disclosure.
Fig. 7 is a block diagram showing an apparatus of accessing a WI-FI network according to an exemplary embodiment of the present disclosure.

### DESCRIPTION OF THE EMBODIMENTS

In order to make the objectives, technical solutions and advantages of the present disclosure more apparent, the embodiments of the present disclosure will be described in further detail with reference to the accompany drawings.

### A First Embodiment

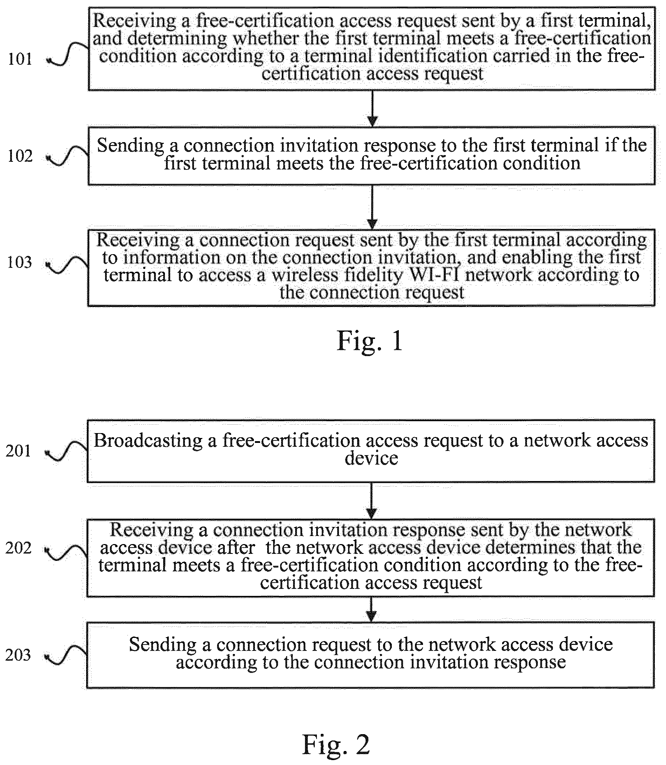

The embodiments of the present disclosure provide a method of accessing a WI-FI network. The method of the present embodiments is used in a network access device. Referring to Fig. 1, the method comprises the following steps.
In step 101, a free-certification access request sent from a first terminal is received, and whether the first terminal meets a free-certification condition is determined according to a terminal identification carried in the free-certification access request;
In step 102, a connection invitation response is sent to the first terminal if the first terminal meets the free-certification condition; and
In step 103, a connection request sent from the first terminal is received according to information on the connection invitation, and the first terminal accesses a wireless fidelity WI-FI network according to the connection request.

In the embodiments of the present disclosure, by receiving a free-certification access request sent from a first terminal which need access a network, and determining whether the first terminal meets a free-certification condition according to the request, sending a connection invitation response to the first terminal if the free-certification condition is met, and enabling the first terminal to access a WI-FI network according to the connection request sent from the first terminal, a terminal which is not convenient for the input operation may access the WI-FI network by way of a free-certification, the access efficiency is improved, and the complexity of the operation is reduced.

### A Second Embodiment

The embodiments of the present disclosure provide a method of accessing a WI-FI network. The method of the present embodiments is used in a terminal. Referring to Fig. 2, the method comprises the following steps.
In step 201, a free-certification access request is broadcasted to a network access device, the free-certification access request carries its own terminal identification;
In step 202, a connection invitation response sent from the network access device is received after the network access device determines that the terminal itself meets a free-certification condition according to the free-certification access request; and
In step 203, a connection request is sent to the network access device according to the connection invitation response, so that the network device enable the terminal itself to access the WI-FI network.

In the embodiments of the present disclosure, by sending a free-certification access request to a network access device by way of broadcasting, and receiving a connection invitation response after the network access device determines the terminal meets a free access condition, and then sending a connection request to the network access device so that the network access device enables the terminal itself to access a WI-FI network, a terminal which is not convenient for the input operation may access the WI-FI network by way of a free-certification, the access efficiency is improved, and the complexity of the operation is reduced.

### A Third Embodiment

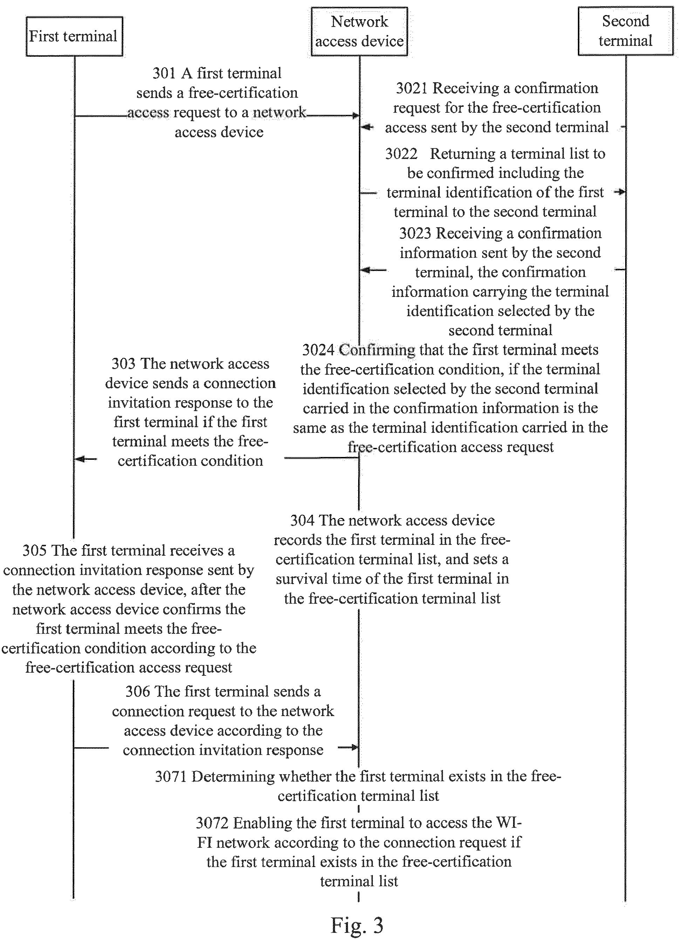

The embodiments of the present disclosure provide a method of accessing a WI-FI network. Referring to Fig. 3, the method comprises the following steps.

In step 301, a first terminal broadcasts a free-certification access request to a network access device, wherein the free-certification access request carries a terminal identification of the first terminal itself.

In the embodiments of the present disclosure, the first terminal is a WI-FI terminal, which needs to access the network access device. After starting, the first terminal broadcasts the free-certification access request periodically through its own wireless module.

In step 302, the network access device receives the free-certification access request sent from the first terminal, and determines whether the first terminal meets a free-certification condition according to the terminal identification carried in the free-certification access request.

The network access device records the terminal identification carried in the free-certification access request and a first time when the free-certification access request is received, in its own terminal list to be confirmed, when receiving the free-certification access request sent from the first terminal. For the first time when the free-certification access request is received is recorded, it is convenient that the time of the free-certification access request serves as a parameter of an auxiliary confirmation when a user confirms whether the first terminal meets the free-certification condition.

Optionally, the user reviews the terminal list to be confirmed in the network access device by logging in a second terminal possessing confirmation permission, and selects a terminal satisfying the free-certification condition in the list. Therefore, prior to step 301, the following step may be performed.
the second terminal is set to possess the confirmation permission to the free-certification access of the first terminal.

Correspondingly, the process that whether the first terminal meets the free-certification condition confirmed by the second terminal may be achieved by the following steps.

In step 3021, a confirmation request for the free-certification access sent from the second terminal is received.

In step 3022, a terminal list to be confirmed including the terminal identification of the first terminal is returned to the second terminal.

In step 3023, confirmation information sent from the second terminal is received, the confirmation information carrying the terminal identification selected by the second terminal.

In step 3024, it is confirmed that the first terminal meets the free-certification condition, if the terminal identification selected by the second terminal carried in the confirmation information is the same as the terminal identification carried in the free-certification access request.

After confirming that the first terminal meets the free-certification condition, the process proceeds to a step 303.

Optionally, after confirming that the first terminal meets the free-certification condition, a free-certification terminal may also be added into another free-certification terminal list maintained by the network access device, wherein the another free-certification terminal list is used for recording terminals that pass the free-certification, so that a terminal confirmed by the free-certification terminal is secondarily confirmed when the terminal accesses the network, and thus the security assurance of the access is increased. Therefore, the step 304 may further be carried out. The performing sequence between the step 303 and the step 304 is not limited.

In step 303, the network access device sends a connection invitation response to the first terminal if the first terminal meets the free-certification condition.

The connection invitation response carries an identification of the network access device, so that the first terminal is accessed according to the identification.

In step 304, the network access device records the first terminal in the free-certification terminal list, and sets a survival time of the first terminal in the free-certification terminal list.

The terminal identification of the terminal satisfying the free-certification condition is recorded in the free-certification terminal list, and the survival time of the terminal in the free-certification terminal list.

The survival time is used in such a manner in which the terminal identification of the terminal satisfying the free-certification condition which has been recorded in the free-certification terminal list, and the terminal are deleted from the free-certification terminal list when the survival time expires, whereby a terminal whose access time is beyond the survival time is prohibited from accessing, and thus the security may be improved.

Therefore, the network access device will maintain the list according to the survival time corresponding to respective terminal satisfying the free-certification condition recorded in the free-certification terminal list, and delete records the survival time of which expires, from the list.

Correspondingly, after step 304, the process proceeds to the following steps.

If the survival time expires, the records corresponding to the first terminal is deleted from the free-certification terminal list.

In step 305, the first terminal receives a connection invitation response sent from the network access device, after the network access device confirms the first terminal meets its own free-certification condition according to the free-certification access request.

Optionally, when the first terminal has a display screen displaying information, the user is informed that a network access device sending the connection invitation response may be accessed by displaying the identification of the network access device on the display screen, the confirmation is finally confirmed by the user, and a step 306 is performed when a confirmation command is triggered by the user.

In step 306, the first terminal sends a connection request to the network access device according to the connection invitation response, so that a network access device enables the first terminal to access the WI-FI network.

Herein, the connection request does not carry certification information.

In step 307, the network access device receives the connection request sent from the first terminal according to information on the connection invitation, and enables the first terminal to access a wireless fidelity WI-FI network according to the connection request.

Optionally, when the first terminal accesses the WI-FI network in step 307, a further certification to the first terminal is required.

Since the terminal satisfying the free-certification condition is recorded in the free-certification terminal list in step 304, the terminal identification carried in the connection request is queried in the list. If the terminal identification exists in the list, a subsequent process of accessing the WI-FI network is performed; and if the terminal identification does not exist in the list, the process of accessing the WI-FI network is refused.

Therefore, the implementation of step 307 may be achieved by step 3071 to step 3072.

In step 3071, whether the first terminal exists in the free-certification terminal list is determined.

In step 3072, the first terminal accesses the WI-FI network according to the connection request if the first terminal exists in the free-certification terminal list.

In the embodiments of the present disclosure, by receiving a free-certification access request sent from a first terminal intending to access a network, and determining whether the first terminal meets a free-certification condition according to the request, sending a connection invitation response to the first terminal if the free-certification condition is met, and enabling the first terminal to access a WI-FI network according to the connection request sent from the first terminal, a terminal which is not convenient for the input operation may access the WI-FI network by way of a free-certification, the access efficiency is improved, and the complexity of the operation is reduced.

### A Fourth Embodiment

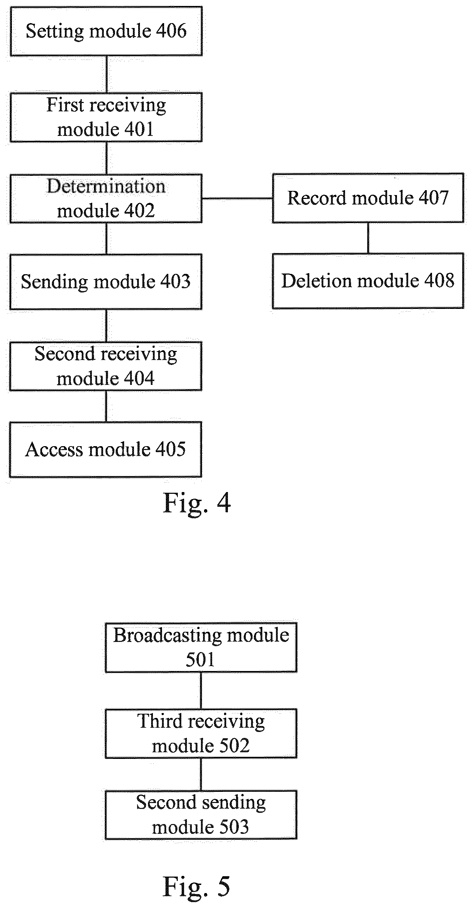

The embodiments of the present disclosure provide an apparatus of accessing a WI-FI network. Referring to Fig. 4, the apparatus comprises:
a first receiving module 401 configured to receive a free-certification access request sent from a first terminal;
a determining module 402 configured to determine whether the first terminal meets a free-certification condition according to a terminal identification carried in the free-certification access request;
a sending module 403 configured to a connection invitation response to the first terminal when the first terminal meets the free-certification condition;
a second receiving module 404 configured to receive a connection request sent from the first terminal according to information on the connection invitation; and
an access module 405 configured to enable the first terminal to access a wireless fidelity WI-FI network according to the connection request.

The apparatus further includes:
a setting module 406 configured to set a second terminal to possess confirmation permission to a free-certification access of the first terminal.

Correspondingly, the determining module 402 comprises:
a first receiving unit configured to receive a confirmation request for the free-certification access sent from the second terminal;
a sending unit configured to return a terminal list to be confirmed including a terminal identification of the first terminal to the second terminal;
a second receiving unit configured to receive a confirmation information sent from the second terminal, the confirmation information carrying a terminal identification selected by the second terminal; and
a first determination unit configured to confirm the first terminal meets the free-certification condition, if the terminal identification selected by the second terminal carried in the confirmation information is the same as the terminal identification carried in the free-certification access request.

The apparatus further comprises:
a record module 407 configured to record the first terminal in a free-certification terminal list, and set a survival time of the first terminal in the free-certification terminal list.

The access module 405 comprises:
a second determination unit configured to determine whether the first terminal exists in the free-certification terminal list; and
an access unit configured to enable the first terminal to access the WI-FI network according to the connection request when the first terminal exists in the free-certification terminal list.

The apparatus further comprises:
a deletion module 408 configured to delete records corresponding to the first terminal from the free-certification terminal list when the survival time expires.

In the embodiments of the present disclosure, by receiving a free-certification access request sent from a first terminal need to access a network, and determining whether the first terminal meets a free-certification condition according to the request, sending a connection invitation response to the first terminal if the free-certification condition is met, and enabling the first terminal to access a WI-FI network according to the connection request sent from the first terminal, a terminal which is not convenient for the input operation may access the WI-FI network by way of a free-certification, the access efficiency is improved, and the complexity of the operation is reduced.

### A Fifth Embodiment

The embodiments of the present disclosure provide an apparatus of accessing a WI-FI network. Referring to Fig. 5, the apparatus comprises:
a broadcasting module 501 configured to broadcast a free-certification access request to a network access device, the free-certification access request carrying its own terminal identification
a third receiving module 502 configured to receive a connection invitation response sent from the network access device after the network access device determines the apparatus itself meets a free-certification condition according to the free-certification access request; and
a second sending module 503 configured to send a connection request to the network access device according to the connection invitation response, so that a network access device enables the apparatus itself to access the WI-FI network.

In the embodiments of the present disclosure, by sending a free-certification access request to a network access device by way of broadcasting, and receiving a connection invitation response after judging the network access device meets a free access condition, and sending a connection request to the network access device again, so that the network access device enables the apparatus to access a WI-FI network, a terminal which is not convenient for the input operation may access the WI-FI network by way of a free-certification, the access efficiency is improved, and the complexity of the operation is reduced.

### A Sixth Embodiment

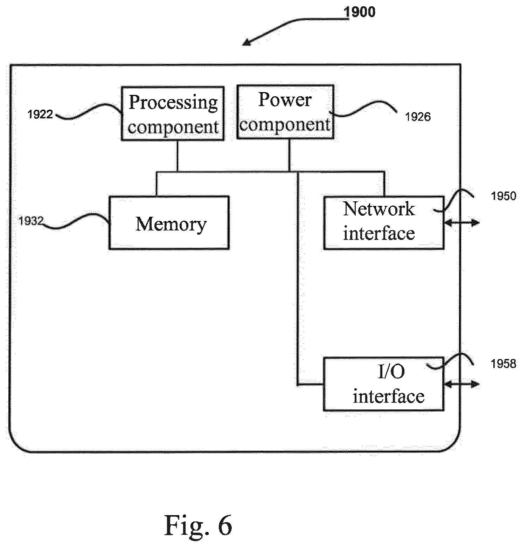

Fig. 6 is a block diagram of an apparatus 1900 for accessing a WI-FI network according to an exemplary embodiment. For example, the apparatus 1900 may be provided as a network access device. As shown in Fig. 6, the apparatus 1900 includes a processing component 1922 that further includes one or more processors, and memory resources represented by a memory 1932 for storing instructions, such as application programs, executable by the processing component 1922. The application programs stored in memory 1932 may include one or more modules, each of which corresponds to a set of instructions. Moreover, the processing component 1922 is configured to execute instructions for performing the above described method of accessing a WI-FI network.

The apparatus 1900 may also include a power component 1926 configured to perform power management of the apparatus 1900, wired or wireless network interface(s) 1950 configured to connect the apparatus 1900 to a network, and an input/output (I/O) interface 1958. The apparatus 1900 may operate based on an operating system stored in the memory 1932, such as Windows ServerTM, Mac OS XTM, UnixTM, LinuxTM, FreeBSDTM, or the like.

In the embodiments of the present disclosure, by receiving a free-certification access request sent from a first terminal need to access a network, and determining whether the first terminal meets a free-certification condition according to the request, sending a connection invitation response to the first terminal if the free-certification condition is met, and enabling the first terminal to access a WI-FI network according to the connection request sent from the first terminal, a terminal which is not convenient for the input operation may access the WI-FI network by way of a free-certification, the access efficiency is improved, and the complexity of the operation is reduced.

### A Seventh Embodiment

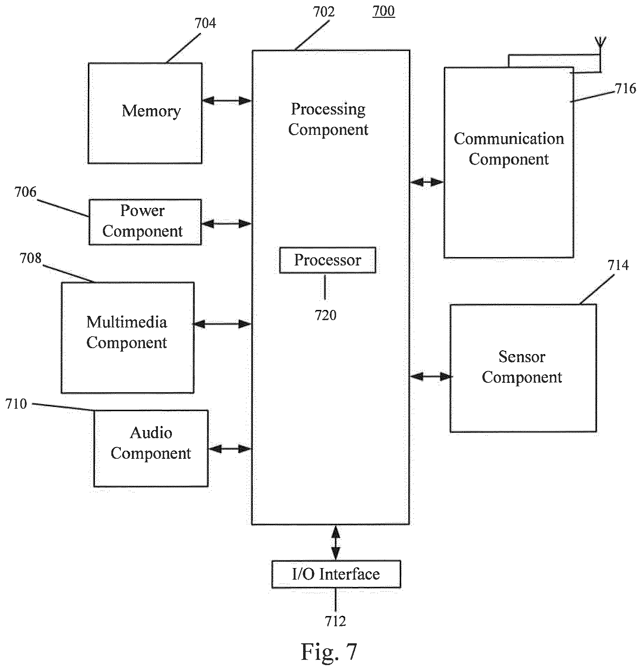

Fig. 7 is a block diagram of a device 700 for accessing a WI-FI network according to an exemplary embodiment. For example, the device 700 may be a mobile phone, a computer, a digital broadcast terminal, a messaging device, a gaming console, a tablet, a medical device, exercise equipment, a personal digital assistant and the like.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 usually controls overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any application or method operated on the device 700, contact data, phonebook data, messages, pictures, videos, etc. The memory 704 may be implemented using any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 708 includes a front camera and/or a rear camera. The front camera and/or the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the device 700 is in an operation mode, such as a call mode, a recording mode, and a voice identification mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, a button, and the like. The button may include, but not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keyboard, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 may access a wireless network based on a communication standard, such as WI-FI, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above method.

In exemplary embodiments, there is also provided a non-transitory computer readable storage medium including instructions, such as included in the memory 704, executable by the processor 720 in the device 700, for performing the above method. For example, the non-transitory computer-readable storage medium may be a ROM, a random access memory (RAM), a CD-ROM, a magnetic tape, a floppy disc, an optical data storage device, and the like.

In the embodiments of the present disclosure, by sending a free-certification access request to a network access device by way of broadcasting, and receiving a connection invitation response after judging the network access device meets a free access condition, and sending a connection request to the network access device again, so that the network access device itself accesses a WI-FI network, a terminal which is not convenient for the input operation may access the WI-FI network by way of a free-certification, the access efficiency is improved, and the complexity of the operation is reduced.

After considering this description and carrying out the embodiments disclosed herein, those skilled in the art may easily anticipate other implementation aspects of the present disclosure. The present disclosure is meant to cover any variations, usage or adaptive change of these embodiments, and these variations, usage or adaptive change follow general concept of the present disclosure and include the common knowledge or the customary technical means in the technical field that is not disclosed in the present disclosure. The description and embodiments are only exemplary, and the invention is defined by the following claims.

## Claims

1. A method of accessing a WI-FI network, comprising:
receiving (101) a free-certification access request broadcast from a first terminal, and determining whether the first terminal meets a free-certification condition according to a terminal identification carried in the free-certification access request;
sending (102) a connection invitation response to the first terminal if the first terminal meets the free-certification condition;
receiving (103) a connection request sent from the first terminal according to the connection invitation response, and enabling the first terminal to access a wireless fidelity WI-FI network according to the connection request;
setting a second terminal to possess a confirmation permission to a free-certification access of the first terminal before the receiving the free-certification access request sent from the first terminal, and wherein;
the step of determining whether the first terminal meets the free-certification condition according to the terminal identification carried in the free-certification access request comprises:
receiving (3021) a confirmation request for the free-certification access sent from the second terminal;
returning (3022) a terminal list to be confirmed including a terminal identification of the first terminal to the second terminal;
receiving (3023) a confirmation information sent from the second terminal, the confirmation information carrying a terminal identification selected by the second terminal; and
confirming (3024) that the first terminal meets the free-certification condition, if the terminal identification selected by the second terminal carried in the confirmation information is the same as the terminal identification carried in the free-certification access request.

2. The method according to claim 1, **characterized in that**, after confirming that the first terminal meets the free-certification condition, the method further comprises:
recording (304) the first terminal in a free-certification terminal list, and setting a survival time of the first terminal in the free-certification terminal list.

3. The method according to claim 2, **characterized in that**, the enabling the first terminal to access the WI-FI network according to the connection request comprises:
determining (307) whether the first terminal exists in the free-certification terminal list; and
enabling (307) the first terminal to access the WI-FI network according to the connection request if the first terminal exists in the free-certification terminal list.

4. The method according to claim 2, **characterized in that**, after setting the survival time of the first terminal in the free-certification terminal list, the method further comprises:
deleting records corresponding to the first terminal from the free-certification terminal list if the survival time expires.

5. A method of accessing a WI-FI network applied in a first terminal, comprising:
Broadcasting (201) a free-certification access request to a network access device, the free-certification access request carrying a terminal identification;
receiving (202) a connection invitation response sent from the network access device after it is determined that a free-certification condition is met according to the free-certification access request; and
sending (203) a connection request to the network access device according to the connection invitation response, so that the network access device enables accessing the WI-FI network
setting a second terminal to possess a confirmation permission to the free-certification access request before the network access device receives the free-certification access request, and wherein;
determining that a free-certification condition is met according to the free-certification access request comprises;
sending a confirmation request for the free-certification access request from the second terminal;
receiving, at the second terminal, a terminal list to be confirmed including a terminal identification of the first terminal;
sending a confirmation information from the second terminal, the confirmation information carrying a terminal identification selected by the second terminal; and
confirming that the free-certification condition is met if the terminal identification selected by the second terminal carried in the confirmation information is the same as the terminal identification carried in the free-certification access request.

6. An apparatus for accessing a WI-FI network, comprising:
a first receiving module (401) configured to receive a free-certification access request broadcast from a first terminal;
a determining module (402) configured to determine whether the first terminal meets a free-certification condition according to a terminal identification carried in the free-certification access request;
a first sending module (403) configured to send a connection invitation response to the first terminal when the first terminal meets the free-certification condition;
a second receiving module (404) configured to receive a connection request sent from the first terminal according to information on the connection invitation response;
an access module (405) configured to enable the first terminal to access a wireless fidelity WI-FI network according to the connection request;
a setting module (406)configured to set a second terminal to possess confirmation permission to a free-certification access of the first terminal;
and wherein the determining module comprises:
a first receiving unit configured to receive a confirmation request for the free-certification access sent from the second terminal;
a sending unit configured to return a terminal list to be confirmed including a terminal identification of the first terminal to the second terminal;
a second receiving unit configured to receive a confirmation information sent from the second terminal, the confirmation information carrying a terminal identification selected by the second terminal; and
a first determination unit configured to confirm the first terminal meets the free-certification condition, if the terminal identification selected by the second terminal carried in the confirmation information is the same as the terminal identification carried in the free-certification access request.

7. The apparatus according to claim 6, **characterized in that**, the apparatus further comprises:
a record module (407) configured to record the first terminal in a free-certification terminal list, and set a survival time of the first terminal in the free-certification terminal list.

8. The apparatus according to claim 7, **characterized in that**, the access module comprises:
a second determination unit configured to determine whether the first terminal exists in the free-certification terminal list; and
an access unit configured to enable the first terminal to access the WI-FI network according to the connection request when the first terminal exists in the free-certification terminal list.

9. The apparatus according to claim 7, **characterized in that**, the apparatus further comprises:
a deletion module (408) configured to delete records corresponding to the first terminal from the free-certification terminal list when the survival time expires.

10. A system for accessing a WI-FI network comprising:
a first terminal comprising:
a broadcasting module (501) configured to broadcast a free-certification access request to a network access device, the free-certification access request carrying a terminal identification;
a third receiving module (502) configured to receive a connection invitation response sent from the network access device after it is determined that a free-certification condition is met according to the free-certification access request; and
a second sending module (503) configured to send a connection request to the network access device according to the connection invitation response, so that the network access device enable accessing the WI-FI network
a second setting module configured to set a second terminal to possess a confirmation permission to the free-certification access request before the network access device receives the free-certification access request; and;
a second terminal comprising;
a second sending unit configured to send a confirmation request for the free-certification access request from the second terminal;
a third receiving unit, configured to receive, at the second terminal, a terminal list to be confirmed including a terminal identification of the first terminal;
a third sending unit configured to send a confirmation information from the second terminal, the confirmation information carrying a terminal identification selected by the second terminal; and
a second determination unit configured to confirm that the free-certification condition is met if the terminal identification selected by the second terminal carried in the confirmation information is the same as the terminal identification carried in the free-certification access request.

11. A computer program product stored on a computer usable medium, comprising computer-readable program means for causing a mobile terminal to implement the method according to any one of claims 1 to 5.

## Patentansprüche

1. Verfahren für Zugang zu einem Wi-Fi-Netz, das Folgendes aufweist:
Empfangen (101) einer von einem ersten Endgerät ausgesendeten Anforderung für Zugang mit freier Zertifizierung und Bestimmen, ob das erste Endgerät eine Bedingung für freie Zertifizierung gemäß einer in der Anforderung für Zugang mit freier Zertifizierung getragenen Endgerätkennung erfüllt;
Senden (102) einer Verbindungseinladungsantwort an das erste Endgerät, falls das erste Endgerät die Bedingung für freie Zertifizierung erfüllt;
Empfangen (103) einer vom ersten Endgerät gesendeten Verbindungsanforderung gemäß der Verbindungseinladungsantwort und Befähigen des ersten Endgeräts zu Zugriff auf ein Wireless Fidelity Wi-Fi-Netz gemäß der Verbindungsanforderung;
Einstellen eines zweiten Endgeräts zum Besitzen einer Bestätigungsgenehmigung für einen Zugang mit freier Zertifizierung des ersten Endgeräts vor dem Empfangen der vom ersten Endgerät gesendeten Anforderung für Zugang mit freier Zertifizierung, und wobei:
der Schritt des Bestimmens, ob das erste Endgerät die Bedingung für freie Zertifizierung gemäß der in der Anforderung für Zugang mit freier Zertifizierung getragenen Endgerätkennung erfüllt, Folgendes aufweist:
Empfangen (3021) einer vom zweiten Endgerät gesendeten Bestätigungsanforderung für den Zugang mit freier Zertifizierung;
Rückmelden (3022) einer zu bestätigenden Endgerätliste, die eine Endgerätkennung des ersten Endgeräts enthält, an das zweite Endgerät;
Empfangen (3023) von vom zweiten Endgerät gesendeten Bestätigungsinformationen, wobei die Bestätigungsinformationen eine vom zweiten Endgerät ausgewählte Endgerätkennung tragen; und
Bestätigen (3024), dass das erste Endgerät die Bedingung für freie Zertifizierung erfüllt, falls die durch das zweite Endgerät ausgewählte Endgerätkennung, die in den Bestätigungsinformationen getragen wird, die gleiche wie die in der Anforderung für Zugang mit freier Zertifizierung getragene Endgerätkennung ist.

2. Verfahren nach Anspruch 1, **dadurch gekennzeichnet, dass** das Verfahren nach dem Bestätigen, dass das Endgerät die Bedingung für freie Zertifizierung erfüllt, ferner Folgendes aufweist:
Eintragen (304) des ersten Endgeräts in eine Liste von Endgeräten freier Zertifizierung und Einstellen einer Überlebensdauer des ersten Endgeräts in der Liste von Endgeräten freier Zertifizierung.

3. Verfahren nach Anspruch 2, **dadurch gekennzeichnet, dass** das Befähigen des ersten Endgeräts zu Zugriff zum Wi-Fi-Netz gemäß der Verbindungsanforderung Folgendes aufweist:
Bestimmen (307), ob das erste Endgerät in der Liste der Endgeräte freier Zertifizierung vorkommt; und
Befähigen (307) des ersten Endgeräts zu Zugang zum Wi-Fi-Netz gemäß der Verbindungsanforderung, falls das erste Endgerät in der Liste der Endgeräte freier Zertifizierung vorkommt.

4. Verfahren nach Anspruch 2, **dadurch gekennzeichnet, dass** das Verfahren nach dem Einstellen der Überlebensdauer des ersten Endgeräts in der Liste der Endgeräte freier Zertifizierung ferner Folgendes aufweist:
Löschen von dem ersten Endgerät entsprechenden Einträgen aus der Liste der Endgeräte freier Zertifizierung, falls die Überlebensdauer abläuft.

5. Verfahren für Zugang zu einem Wi-Fi-Netz, in einem ersten Endgerät angewendet, das Folgendes aufweist:
Aussenden (201) einer Anforderung für Zugang mit freier Zertifizierung an eine Netzzugangsvorrichtung, wobei die Anforderung für Zugang mit freier Zertifizierung eine Endgerätkennung trägt;
Empfangen (202) einer von der Netzzugangsvorrichtung gesendeten Verbindungseinladungsantwort, nachdem bestimmt worden ist, dass eine Bedingung für freie Zertifizierung gemäß der Anforderung für Zugang mit freier Zertifizierung erfüllt wird; und
Senden (203) einer Verbindungsanforderung an die Netzzugangsvorrichtung gemäß der Verbindungseinladungsanforderung, so dass die Netzzugangsvorrichtung den Zugang zum Wi-Fi-Netz ermöglicht;
Einstellen eines zweiten Endgeräts zum Besitzen einer Bestätigungsgenehmigung auf die Anforderung für Zugang mit freier Zertifizierung, bevor die Netzzugangsvorrichtung die Anforderung für Zugang mit freier Zertifizierung empfängt, und wobei:
das Bestimmen, dass eine Bedingung für freie Zertifizierung gemäß der Anforderung für Zugang mit freier Zertifizierung Folgendes aufweist:
Senden einer Bestätigungsanforderung für die Anforderung für Zugang mit freier Zertifizierung vom zweiten Endgerät;
am zweiten Endgerät Empfangen einer zu bestätigenden Endgerätliste, die eine Endgerätkennung des ersten Endgeräts enthält;
Senden von Bestätigungsinformationen vom zweiten Endgerät, wobei die Bestätigungsinformationen eine durch das zweite Endgerät ausgewählte Endgerätkennung tragen; und
Bestätigen, dass die Bedingung für freie Zertifizierung erfüllt wird, falls die durch das zweite Endgerät ausgewählte Endgerätkennung, die in den Bestätigungsinformationen getragen wird, die gleiche wie die in der Anforderung für Zugang mit freier Zertifizierung getragene Endgerätkennung ist.

6. Vorrichtung für Zugang zu einem Wi-Fi-Netz, die Folgendes aufweist:
ein erstes Empfangsmodul (401), das zum Empfangen einer von einem ersten Endgerät ausgesendeten Anforderung für Zugang mit freier Zertifizierung konfiguriert ist;
ein Bestimmungsmodul (402), das zum Bestimmen, ob das erste Endgerät eine Bedingung für freie Zertifizierung gemäß einer in der Anforderung für Zugang mit freier Zertifizierung getragenen Endgerätkennung erfüllt, konfiguriert ist;
ein erstes Sendemodul (403), das zum Senden einer Verbindungseinladungsantwort an das erste Endgerät, wenn das erste Endgerät die Bedingung für freie Zertifizierung erfüllt, konfiguriert ist;
ein zweites Empfangsmodul (404), das zum Empfangen einer vom ersten Endgerät gesendeten Verbindungsanforderung gemäß Informationen über die Verbindungseinladungsantwort konfiguriert ist;
ein Zugangsmodul (405), das zum Befähigen des ersten Endgeräts zu Zugriff auf ein Wireless Fidelity Wi-Fi-Netz gemäß der Verbindungsanforderung konfiguriert ist;
ein Einstellmodul (406), das zum Einstellen eines zweiten Endgeräts zum Besitzen einer Bestätigungsgenehmigung für einen Zugang mit freier Zertifizierung des ersten Endgeräts konfiguriert ist;
und wobei das Bestimmungsmodul Folgendes aufweist:
eine erste Empfangseinheit, die zum Empfangen einer vom zweiten Endgerät gesendeten Bestätigungsanforderung für den Zugang mit freier Zertifizierung konfiguriert ist;
eine Sendeeinheit, die zum Rückmelden einer zu bestätigenden Endgerätliste, die eine Endgerätkennung des ersten Endgeräts enthält, an das zweite Endgerät konfiguriert ist;
eine zweite Empfangseinheit, die zum Empfangen von vom zweiten Endgerät gesendeten Bestätigungsinformationen konfiguriert ist, wobei die Bestätigungsinformationen eine vom zweiten Endgerät ausgewählte Endgerätkennung tragen; und
eine erste Bestimmungseinheit, die zum Bestätigen, dass das erste Endgerät die Bedingung für freie Zertifizierung erfüllt, falls die durch das zweite Endgerät ausgewählte Endgerätkennung, die in den Bestätigungsinformationen getragen wird, die gleiche wie die in der Anforderung für Zugang mit freier Zertifizierung getragene Endgerätkennung ist, konfiguriert ist.

7. Verfahren nach Anspruch 1, **dadurch gekennzeichnet, dass** die Vorrichtung ferner Folgendes aufweist:
ein Eintragsmodul (407), das zum Eintragen des ersten Endgeräts in eine Liste von Endgeräten freier Zertifizierung und Einstellen einer Überlebensdauer des ersten Endgeräts in der Liste von Endgeräten freier Zertifizierung konfiguriert ist.

8. Vorrichtung nach Anspruch 7, **dadurch gekennzeichnet, dass** das Zugangsmodul Folgendes aufweist:
eine zweite Bestimmungseinheit, die zum Bestimmen, ob das erste Endgerät in der Liste der Endgeräte freier Zertifizierung vorkommt, konfiguriert ist; und
eine Zugangseinheit, die zum Befähigen des ersten Endgeräts zu Zugang zum Wi-Fi-Netz gemäß der Verbindungsanforderung, falls das erste Endgerät in der Liste der Endgeräte freier Zertifizierung vorkommt, konfiguriert ist.

9. Vorrichtung nach Anspruch 7, **dadurch gekennzeichnet, dass** die Vorrichtung ferner Folgendes aufweist:
ein Löschmodul (408), das zum Löschen von dem ersten Endgerät entsprechenden Einträgen aus der Liste der Endgeräte freier Zertifizierung, wenn die Überlebensdauer abläuft, konfiguriert ist.

10. Vorrichtung für Zugang zu einem Wi-Fi-Netz, das Folgendes aufweist:
ein erstes Endgerät, das Folgendes aufweist:
ein Broadcast-Modul (501), das zum Aussenden einer Anforderung für Zugang mit freier Zertifizierung an eine Netzzugangsvorrichtung konfiguriert ist, wobei die Anforderung für Zugang mit freier Zertifizierung eine Endgerätkennung trägt;
ein drittes Empfangsmodul (502), das zum Empfangen einer von der Netzzugangsvorrichtung gesendeten Verbindungseinladungsantwort, nachdem bestimmt worden ist, dass eine Bedingung für freie Zertifizierung gemäß der Anforderung für Zugang mit freier Zertifizierung erfüllt wird, konfiguriert ist; und
ein zweites Sendemodul (503), das zum Senden einer Verbindungsanforderung an die Netzzugangsvorrichtung gemäß der Verbindungseinladungsanforderung, so dass die Netzzugangsvorrichtung den Zugang zum Wi-Fi-Netz ermöglicht, konfiguriert ist;
ein zweites Einstellmodul, das zum Einstellen eines zweiten Endgeräts zum Besitzen einer Bestätigungsgenehmigung auf die Anforderung für Zugang mit freier Zertifizierung, bevor die Netzzugangsvorrichtung die Anforderung für Zugang mit freier Zertifizierung empfängt, konfiguriert ist; und:
ein zweites Endgerät, das Folgendes aufweist:
eine zweite Sendeeinheit, die zum Senden einer Bestätigungsanforderung für die Anforderung für Zugang mit freier Zertifizierung vom zweiten Endgerät konfiguriert ist;
eine dritte Empfangseinheit, die zum Empfangen einer zu bestätigenden Endgerätliste, die eine Endgerätkennung des ersten Endgeräts enthält, am zweiten Endgerät konfiguriert ist;
eine dritte Sendeeinheit, die zum Senden von Bestätigungsinformationen vom zweiten Endgerät konfiguriert ist, wobei die Bestätigungsinformationen eine durch das zweite Endgerät ausgewählte Endgerätkennung tragen; und
eine zweite Bestätigungseinheit, die zum Bestätigen, dass die Bedingung für freie Zertifizierung erfüllt wird, falls die durch das zweite Endgerät ausgewählte Endgerätkennung, die in den Bestätigungsinformationen getragen wird, die gleiche wie die in der Anforderung für Zugang mit freier Zertifizierung getragene Endgerätkennung ist, konfiguriert ist.

11. Computerprogrammprodukt, auf einem computernutzbaren Medium gespeichert, das ein computerlesbares Programmmittel zum Veranlassen eines Mobil-Endgeräts zum Implementieren des Verfahrens nach einem der Ansprüche 1 bis 5 aufweist.

## Revendications

1. Procédé d'accès à un réseau WiFi, comprenant :
recevoir (101) une requête d'accès à certification gratuite diffusée d'un premier terminal, et déterminer si le première terminal remplit une condition de certification gratuite conformément à une identification du terminal portée dans la requête d'accès à certification gratuite ;
envoyer (102) une réponse d'invitation de connexion au premier terminal si le premier terminal remplit la condition de certification gratuite ;
recevoir (103) une requête de connexion envoyée du premier terminal conformément à la réponse d'invitation de connexion, et permettre au premier terminal d'accéder à un réseau de fidélité sans fil WiFi conformément à la requête de connexion ;
régler un deuxième terminal pour qu'il possède une permission de confirmation à un accès à certification gratuite du premier terminal avant le fait de recevoir la requête d'accès à certification gratuite envoyée du premier terminal, et où ;
l'étape consistant à déterminer si le premier terminal remplit la condition de certification gratuite conformément à l'identification du terminal portée dans le requête d'accès à certification gratuite comprend :
recevoir (3021) une requête de confirmation pour l'accès à certification gratuite envoyée du deuxième terminal ;
renvoyer (3022) une liste de terminaux à confirmer comprenant une identification de terminal du premier terminal au deuxième terminal ;
recevoir (3023) une information de confirmation envoyée du deuxième terminal, l'information de confirmation portant une identification de terminal sélectionnée par le deuxième terminal ; et
confirmer (3024) que le premier terminal remplit la condition de certification gratuite, si l'identification de terminal sélectionnée par le deuxième terminal portée dans l'information de confirmation est la même que l'identification de terminal portée dans la requête d'accès à certification gratuite.

2. Procédé selon la revendication 1, **caractérisé en ce que**, après avoir confirmé que le premier terminal remplit la condition de certification gratuite, le procédé comprend en outre :
enregistrer (304) le premier terminal dans une liste de terminaux à certification gratuite, et régler un temps de survie du premier terminal dans la liste de terminaux à certification gratuite.

3. Procédé selon la revendication 2, **caractérisé en ce que**, le fait de permettre au premier terminal d'accéder au réseau WiFi conformément à la requête de connexion comprend :
déterminer (307) si le premier terminal existe dans la liste de terminaux à certification gratuite ; et
permettre (307) au premier terminal d'accéder au réseau WiFi conformément à la requête de connexion si le premier terminal existe dans la liste de terminaux à certification gratuite.

4. Procédé selon la revendication 2, **caractérisé en ce que**, après avoir réglé le temps de survie du premier terminal dans la liste de terminaux à certification gratuite, le procédé comprend en outre :
supprimer des enregistrements correspondant au premier terminal de la liste de terminaux à certification gratuite si le temps de survie expire.

5. Procédé d'accès à un réseau WiFi appliqué dans un premier terminal, comprenant :
diffuser (201) une requête d'accès à certification gratuite à un dispositif d'accès réseau, la requête d'accès à certification gratuite portant une identification de terminal ;
recevoir (202) une réponse d'invitation de connexion envoyée du dispositif d'accès réseau après qu'il a été déterminé qu'une condition de certification gratuite est remplie conformément à la requête d'accès à certification gratuite ; et
envoyer (203) une requête de connexion au dispositif d'accès réseau conformément à la réponse d'invitation de connexion, de sorte que le dispositif d'accès réseau permet d'accéder au réseau WiFi ;
régler un deuxième terminal pour qu'il possède une permission de confirmation à la requête d'accès à certification gratuite avant que le dispositif d'accès réseau ne reçoive la requête d'accès à certification gratuite, et où ;
déterminer qu'une condition de certification gratuite est remplie conformément à la requête d'accès à certification gratuite comprend :
envoyer une requête de confirmation pour la requête d'accès à certification gratuite du deuxième terminal ;
recevoir, au deuxième terminal, une liste de terminaux à confirmer comprenant une identification de terminal du premier terminal ;
envoyer une information de confirmation du deuxième terminal, l'information de confirmation portant une identification de terminal sélectionnée par le deuxième terminal ; et
confirmer que la condition de certification gratuite est remplie si l'identification de terminal sélectionnée par le deuxième terminal portée dans l'information de confirmation est la même que l'identification de terminal portée dans la requête d'accès à certification gratuite.

6. Appareil pour accéder à un réseau WiFi, comprenant :
un premier module de réception (401) configuré pour recevoir une requête d'accès à certification gratuite diffusée d'un premier terminal ;
un module de détermination (402) configuré pour déterminer si le premier terminal remplit une condition de certification gratuite conformément à une identification du terminal portée dans la requête d'accès à certification gratuite ;
un premier module d'envoi (403) configuré pour envoyer une réponse d'invitation de connexion au premier terminal lorsque le premier terminal remplit la condition de certification gratuite ;
un deuxième module de réception (404) configuré pour recevoir une requête de connexion envoyée du premier terminal conformément à la réponse d'invitation de connexion ;
un module d'accès (405) configuré pour permettre au premier terminal d'accéder à un réseau de fidélité sans fil WiFi conformément à la requête de connexion ;
un module de réglage (406) configuré pour régler un deuxième terminal pour qu'il possède une permission de confirmation à un accès à certification gratuite du premier terminal ;
et où le module de détermination comprend :
une première unité de réception configurée pour recevoir une requête de confirmation pour l'accès à certification gratuite envoyée du deuxième terminal ;
une unité d'envoi configurée pour renvoyer une liste de terminaux à confirmer comprenant une identification de terminal du premier terminal au deuxième terminal ;
une deuxième unité de réception configurée pour recevoir une information de confirmation envoyée du deuxième terminal, l'information de confirmation portant une identification de terminal sélectionnée par le deuxième terminal ; et
une première unité de détermination configurée pour confirmer que le premier terminal remplit la condition de certification gratuite, si l'identification de terminal sélectionnée par le deuxième terminal portée dans l'information de confirmation est la même que l'identification de terminal portée dans la requête d'accès à certification gratuite.

7. Appareil selon la revendication 6, **caractérisé en ce que**, l'appareil comprend en outre :
un module d'enregistrement (407) configuré pour enregistrer le premier terminal dans une liste de terminaux à certification gratuite, et régler un temps de survie du premier terminal dans la liste de terminaux à certification gratuite.

8. Appareil selon la revendication 7, **caractérisé en ce que**, le module d'accès comprend :
une deuxième unité de détermination configurée pour déterminer si le premier terminal existe dans la liste de terminaux à certification gratuite ; et
une unité d'accès configurée pour permettre au premier terminal d'accéder au réseau WiFi conformément à la requête de connexion lorsque le premier terminal existe dans la liste de terminaux à certification gratuite.

9. Appareil selon la revendication 7, **caractérisé en ce que**, l'appareil comprend en outre :
un module de suppression (408) configuré pour supprimer des enregistrements correspondant au premier terminal de la liste de terminaux à certification gratuite lorsque le temps de survie expire.

10. Système d'accès à un réseau WiFi comprenant :
un premier terminal comprenant :
un module de diffusion (501) configuré pour diffuser une requête d'accès à certification gratuite à un dispositif d'accès réseau, la requête d'accès à certification gratuite portant une identification de terminal ;
un troisième module de réception configuré pour recevoir une réponse d'invitation de connexion envoyée du dispositif d'accès réseau après qu'il a été déterminé qu'une condition de certification gratuite est remplie conformément à la requête d'accès à certification gratuite ; et
un deuxième module d'envoi configuré pour envoyer une requête de connexion au dispositif d'accès réseau conformément à la réponse d'invitation de connexion, de sorte que le dispositif d'accès réseau permet d'accéder au réseau WiFi ;
un deuxième module de réglage configuré pour régler un deuxième terminal pour qu'il possède une permission de confirmation à la requête d'accès à certification gratuite avant que le dispositif d'accès réseau ne reçoive la requête d'accès à certification gratuite ; et ;
un deuxième terminal comprenant :
un deuxième module d'envoi configuré pour envoyer une requête de confirmation pour la requête d'accès à certification gratuite du deuxième terminal ;
un troisième module de réception configuré pour recevoir, au deuxième terminal, une liste de terminaux à confirmer comprenant une identification de terminal du premier terminal ;
un troisième module d'envoi configuré pour envoyer une information de confirmation du deuxième terminal, l'information de confirmation portant une identification de terminal sélectionnée par le deuxième terminal ; et
un deuxième module de détermination configuré pour confirmer que la condition de certification gratuite est remplie si l'identification de terminal sélectionnée par le deuxième terminal portée dans l'information de confirmation est la même que l'identification de terminal portée dans la requête d'accès à certification gratuite.

11. Produit de programme informatique stocké sur un support utilisable par ordinateur, comprenant un moyen de programme lisible par ordinateur pour faire qu'un terminal mobile mette en œuvre le procédé selon l'une quelconque des revendications 1 à 5.
